# FASCICULE DE BREVET EUROPEEN

(11) **EP 0 754 868 B1**
(45) Date de publication et mention de la délivrance du brevet: **30.08.2000**
(21) Numéro de dépôt: 96401443.5
(22) Date de dépôt: 28.06.1996
(51) Int. Cl.: F16B 5/02

(54) **Attache pour la fixation réglable de deux pièces espacées**
Verbindungselement zur einstellbaren Befestigung von zwei getrennten Bauteilen
Connection for adjustably assembling two separated elements

(30) Priorité: 21.07.1995 FR 9508899
(43) Date de publication de la demande: 22.01.1997
(73) Titulaire: RAPID S.A., F-75017 Paris (FR)
(72) Inventeur: Leon, Jean-Pierre, 78800 Houilles (FR)
(74) Mandataire: Durand, Yves Armand Louis

(56) Documents cités:
- EP-A- 0 414 162
- DE-A- 3 328 338
- DE-A- 4 332 222

## Description

La présente invention a essentiellement pour objet une attache permettant la fixation réglable de deux pièces quelconques qui doivent être fixées l'une à l'autre suivant un certain espacement.

On a déjà proposé de réunir l'une à l'autre des pièces espacées à l'aide de systèmes qui, d'une manière générale, comportent deux éléments relativement mobiles, l'un et l'autre élément permettant respectivement la fixation réglable et espacée de l'une et l'autre pièce (par exemple DE-A-3 328 338).

Toutefois, ces systèmes antérieurs étaient généralement compliqués et le réglage de l'écartement des pièces demeurait difficile ou à tout le moins délicat, et bien souvent aléatoire.

Aussi, la présente invention a pour but de remédier à ces inconvénients en proposant une attache permettant un réglage simple, facile et fiable de l'écartement des pièces une fois que celles-ci sont fixées l'une à l'autre. En outre, le réglage en place d'une pièce par rapport à l'autre pourra, avec cette attache, être effectué très rapidement.

A cet effet, l'invention a pour objet une attache pour la fixation réglable de deux pièces quelconques espacées l'une de l'autre, et du type comprenant deux éléments allongés vissés l'un sur l'autre par l'une de leurs extrémités et dont les extrémités libres comportent chacune un moyen de fixation sur respectivement l'une et l'autre pièce, caractérisée en ce que l'extrémité libre de l'un des éléments allongés est pourvue de pattes ou analogues sur lesquelles peut être fixée l'une des pièces, ou première pièce, et entre lesquelles est montée axialement mobile une tête (17) adoptant sélectivement une position sortie des pattes (12) permettant une libre rotation de la tête par rapport aux pattes et l'introduction de ladite extrémité libre (7) dans ladite première pièce (1), et une position rentrée entre les pattes (12) permettant un entraînement en rotation des pattes (12) par la tête (17) et le réglage de la première pièce (1) par rapport à l'autre pièce (2) ou deuxième pièce, par rotation de la tête (17).

Suivant un mode de réalisation préféré, la tête précitée est constituée par une tige qui est montée à coulissement et rotation dans un alésage pratiqué dans l'élément allongé portant les pattes, et qui porte à l'une de ses extrémités un ergot ou analogue muni d'une empreinte susceptible de coopérer avec un outil.

L'attache selon cette invention est encore caractérisée par le fait que l'ergot précité possède, dans un plan orthogonal à la direction longitudinale commune des pattes, au moins deux dimensions respectivement supérieure et inférieure à la distance d'écartement des pattes.

On précisera encore que le sommet de l'ergot précité est chanfreiné pour faciliter ainsi l'introduction dans la première pièce.

Suivant encore une autre caractéristique de cette attache, les pattes précitées prennent naissance sur une collerette solidaire de l'un des éléments allongés et se terminent par une partie en forme de crochet pour retenir la première pièce, tandis que l'extrémité libre de l'autre élément allongé comporte une partie en forme d'ancre pour retenir la deuxième pièce.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en coupe axiale d'une attache conforme à cette invention, laquelle attache est déjà fixée sur une pièce et est en position prête à être fixée sur une autre pièce qui est aussi visible sur la figure.

La figure 2 est une vue en coupe axiale similaire à la figure 1, mais montrant les deux pièces en position assemblée par l'attache selon cette invention.

La figure 3 est une vue partielle et en plan de l'une des pièces à assembler, à savoir la pièce inférieure sur les figures.

On voit sur les figures une attache permettant la fixation réglable de deux pièces quelconques, à savoir une pièce 1 et une pièce 2, suivant un certain espacement entre elles.

L'attache proprement dite se compose essentiellement de deux éléments allongés 3 et 4 vissés l'un sur l'autre par l'une de leurs extrémités. Plus précisément, et suivant l'exemple de réalisation représenté, l'élément allongé 3 comporte un taraudage 5 dans lequel peut être vissé une tige filetée 6 appartenant à l'élément allongé 4.

L'extrémité libre 7 de l'élément allongé 3, de même que l'extrémité libre 8 de l'élément allongé 4 comprend un moyen de fixation sur respectivement la pièce 1 et la pièce 2.

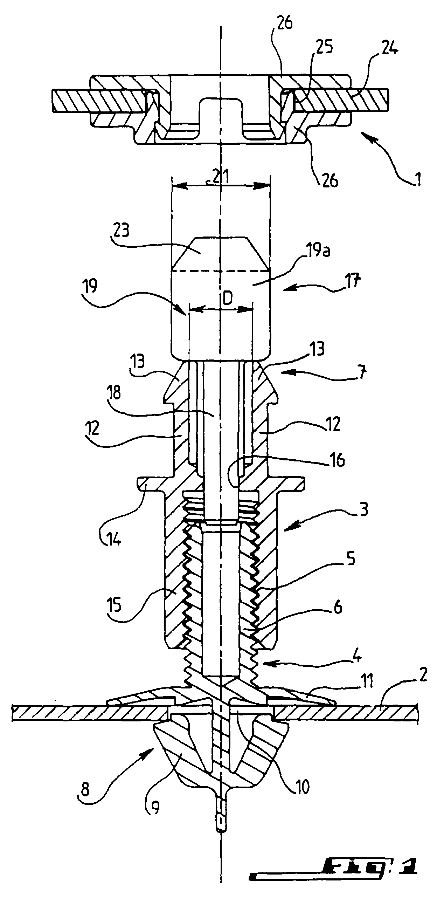

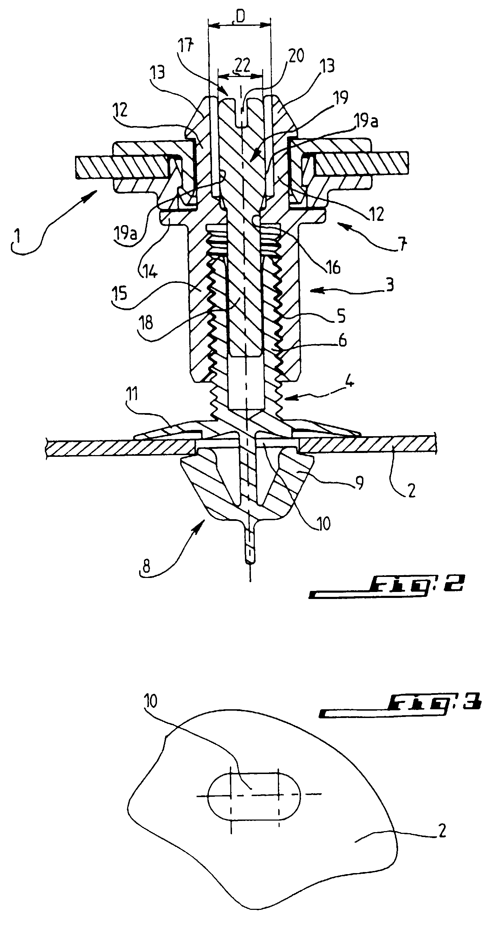

Comme on le voit bien sur les figures, et suivant un exemple de réalisation, l'extrémité 8 se compose d'une partie en forme d'ancre élastiquement déformable 9 qui peut passer au travers d'un trou 10 ménagé dans la pièce 2 et bien visible sur la figure 3. Plus précisément, la pièce 2, qui est par exemple une plaque ou une platine est prise en sandwich entre la partie en forme d'ancre 9 et un disque souple 11 sur lequel prend naissance la tige filetée 6.

Ainsi, l'extrémité libre 8 de l'élément allongé 4 comporte essentiellement deux éléments élastiquement déformables constitués par le disque 11 et la partie en forme d'ancre 9.

Suivant une caractéristique essentielle de l'invention, l'extrémité libre 7 de l'élément allongé 3 est munie d'une paire de pattes 12 sur lesquelles peut être retenue la pièce 1. Ces pattes 12 s'étendent vers le haut parallèlement l'une à l'autre, sont élastiquement déformables et se terminent par une partie en forme de crochet 13. Elles prennent naissance sur une collerette 14 qui, en quelque sorte, sépare les pattes 12 de la partie restante 15 avec taraudage 5, de l'élément allongé 3.

Au niveau de la collerette 14 est prévu un alésage 16 dans lequel est montée rotative et axialement coulissante une tête repérée d'une manière générale en 17.

La tête 17 se compose d'une tige 18 retenue dans l'alésage 16 et portant à l'une de ses extrémités un ergot 19 pourvu d'une empreinte 20. Cette empreinte, comme on le voit bien sur la figure 2, présente la forme d'une fente de façon à permettre l'actionnement de la tête 17 par un tournevis. Mais toute autre forme d'empreinte ou d'outil pourrait être utilisée sans sortir du cadre de l'invention.

Suivant l'exemple représenté, l'ergot 19 présente sensiblement la forme d'un parallélépipède rectangle dont les dimensions repérées respectivement en 21 sur la figure 1 et en 22 sur la figure 2, dans un plan orthogonal à la direction longitudinale commune des pattes 12, sont telles que :
La dimension 21 est supérieure à la distance d'écartement D des pattes 12.

La dimension 22 est inférieure à la distance d'écartement D desdites pattes 12.

L'ergot 19 pourrait avoir une autre forme que celle représentée, à la condition bien sûr que ses dimensions répondent aux critères ci-dessus.

Cet ergot 19 comporte un sommet chanfreiné 23 que l'on voit bien sur la figure 1 et qui facilite l'introduction de l'attache sur la pièce 1.

Suivant l'exemple de réalisation représenté sur la figure 1, la pièce 1 se compose d'une plaque, d'un panneau ou analogue 24 avec un orifice 25 et prise en sandwich au niveau de l'orifice 25 entre deux brides annulaires 26 clippées l'une sur l'autre. Ainsi, dans ce cas particulier, l'ensemble constitué par la plaque 24 et les brides 26 constitue la pièce 1, étant bien entendu que cette pièce pourrait avoir toute autre constitution que celle représentée et former par exemple une pièce unique avec orifice dans lequel peut pénétrer la tête 17 prévue à l'extrémité libre 7 de l'élément allongé 3 dans lequel est vissé l'autre élément allongé 4 de l'attache.

Mais, pour une meilleure compréhension de l'invention, on expliquera ci-après comment s'effectue le montage de l'attache et son réglage, une fois l'attache montée sur les deux pièces 1 et 2.

Tout d'abord, comme on le voit sur la figure 1, la partie en forme d'ancre 9 constituant l'extrémité 8 de l'élément allongé 4 de l'attache est monté par clippage dans l'orifice 10 de la pièce 2.

L'ergot 19 porté par l'extrémité libre 7 de l'autre élément allongé 3 de l'attache se trouve dans la position visible sur la figure 1, c'est-à-dire dans la position sortie des pattes 12 en prenant appui sur les parties en crochet 13 de ces pattes.

La pièce 1 est alors introduite par pression sur la tête 17, cette introduction étant facilitée par le sommet chanfreiné 23 de l'ergot 19, jusqu'à ce que ladite pièce 1 vienne par clippage se positionner définitivement entre les parties en forme de crochet 13 des pattes 12 et la collerette 14, comme cela est bien visible sur la figure 2.

A ce stade, on fait effectuer à l'ergot 19 une rotation de 90°, ce qui lui permet, par une pression exercée sur cet ergot, de venir se loger entre les pattes 12, comme on le voit encore sur la figure 2.

Ensuite, à l'aide d'un tournevis (non représenté) inséré dans l'empreinte 20, on pourra faire effectuer à l'ergot 19, c'est-à-dire à la tête 17, une rotation dans un sens ou dans l'autre de façon à régler ainsi l'allongement de l'attache, c'est-à-dire la distance d'écartement entre les pièces 1 et 2. En effet, la rotation de l'ergot 19 dont les faces opposées 19a coopèrent avec les pattes 12 sur lesquelles est montée la pièce 1, provoquera la rotation de l'élément allongé 3 par rapport à l'élément allongé 4, de sorte que l'allongement de l'attache ou son rétrécissement, suivant le sens de rotation imposé à l'ergot 19, sera réalisé.

L'attache selon cette invention permet par conséquent un réglage en place fiable et simple de l'espacement entre deux pièces assemblées quelconques.

Bien entendu, l'invention n'est nullement limitée au mode de réalisation décrit et illustré qui n'a été donné qu'à titre d'exemple.

C'est ainsi que les divers éléments constituant l'attache peuvent être réalisés en une matière synthétique ou en une autre matière appropriée quelconque, étant entendu que la tige 18 de la tête 17 devra être retenue par frottement dans l'alésage 16 pratiqué dans l'élément allongé 3, et cela tout en pouvant tourner et être déplaçable axialement dans cet alésage.

L'invention comprend donc tous les équivalents techniques des moyens décrits ainsi que leurs combinaisons si celles-ci sont effectuées suivant le cadre des revendications qui suivent.

## Revendications

1. Attache pour la fixation réglable de deux pièces quelconques (1, 2) espacées l'une de l'autre, et du type comprenant deux éléments allongés (3, 4) vissés l'un sur l'autre par l'une de leurs extrémités et dont les extrémités libres (7,8) comportent chacune un moyen de fixation sur respectivement l'une et l'autre pièce, caractérisée en ce que l'extrémité libre (7) de l'un (3) des éléments allongés (3,4) est pourvue de pattes ou analogues (12) sur lesquelles peut être fixé l'une (1) des pièces, ou première pièce, et entre lesquelles est montée axialement mobile une tête (17) adoptant sélectivement une position sortie des pattes (12) permettant une libre rotation de la tête par rapport aux pattes et l'introduction de ladite extrémité libre (7) dans ladite première pièce (1), et une position rentrée entre les pattes (12) permettant un entraînement en rotation des pattes (12) par la tête (17) et le réglage de la première pièce (1) par rapport à l'autre pièce (2) ou deuxième pièce, par rotation de la tête (17).

2. Attache selon la revendication 1, caractérisée en ce que la tête précitée (17) est constituée par une tige (18) qui est montée à coulissement et rotation dans un alésage (16) pratiqué dans l'élément allongé (3) portant les pattes (12) et qui porte à l'une de ses extrémités un ergot ou analogue (19) muni d'une empreinte (20) susceptible de coopérer avec un outil.

3. Attache selon la revendication 2, caractérisée en ce que l'ergot précité (19) possède, dans un plan orthogonal à la direction longitudinale commune des pattes (12), au moins deux dimensions (21, 22) respectivement supérieure et inférieure à la distance d'écartement (D) des pattes (12).

4. Attache selon la revendication 2 ou 3, caractérisée en ce que le sommet (23) de l'ergot précité est chanfreiné.

5. Attache selon l'une des revendications précédentes, caractérisée en ce que les pattes précitées (12) prennent naissance sur une collerette (14) solidaire de l'un (3) des éléments allongés (3, 4) et se terminent par une partie en forme de crochet (13) pour retenir la première pièce (1), tandis que l'extrémité libre (8) de l'autre élément allongé (4) comporte une partie en forme d'ancre (9) pour retenir la deuxième pièce (2).

## Patentansprüche

1. Verbindungselement zur einstellbaren Befestigung von 2 voneinander getrennten beliebigen Bauteilen (1, 2) und der Art, umfassend zwei längliche Elemente (3, 4), die durch eines ihrer äußeren Enden aufeinander geschraubt sind und deren freie äußere Enden (7, 8) jedes ein Mittel zur Befestigung auf jeweils dem einen oder dem anderen Stück umfassen, dadurch gekennzeichnet, daß das freie äußere Ende (7) eines (3) der länglichen Elemente (3, 4) mit Befestigungseisen oder dergleichen (12) versehen ist, auf denen eines (1) der Stücke, oder erstes Stück, befestigt werden kann, und auf denen in einer Ausgangsposition
"und zwischen denen axial mobil ein Kopf (17) angebracht ist, der selektiv eine Austrittsposition der Befestigungseisen (12) annimmt, was ein freies Drehen des Kopfes im Verhältnis zu den Befestigungseisen und die Einführung besagten äußeren freien Endes (7) in besagtes erstes Stück (1) erlaubt, und eine Eintrittsposition zwischen den Befestigungseisen (12) annimmt, was einen Rotationsantrieb der Befestigungseisen (12) durch den Kopf (17) und die Einstellung des ersten Stücks (1) im Verhältnis zum anderen Stück (2) oder zweiten Stück durch Rotation des Kopfes (17) erlaubt".

2. Verbindungselement gemäß Anspruch 1, dadurch gekennzeichnet, daß besagter Kopf (17) durch einen Stift (18) gebildet wird, der verschiebbar und drehbar in einer Ausbohrung (16) angebracht ist, die in dem die Befestigungseisen (12) tragenden länglichen Element (3) praktiziert ist, das an einem seiner äußeren Enden einen Vorsprung oder dergleichen (19) trägt, der mit einer Vertiefung (20) versehen ist, der geeignet ist, mit einem Werkzeug zusammenzuwirken.

3. Verbindungselement gemäß Anspruch 2, dadurch gekennzeichnet, daß besagter Vorsprung (19) in einer zur den Befestigungseisen (12) gemeinsamen Längsrichtung orthogonalen Ebene wenigstens zwei Abmessungen (21, 22) umfaßt, die jeweils zur Trennungsentfernung (D) zu den Befestigungseisen (12) die obere und die untere sind.

4. Verbindungselement gemäß Anspruch 2 oder 3, dadurch gekennzeichnet, daß der Scheitel (23) besagten Vorsprungs abgefast ist.

5. Verbindungselement gemäß einem der vorherigen Ansprüche, dadurch gekennzeichnet, daß besagte Befestigungseisen (12) ihren Ursprung auf einem Kragen (14) haben, der mit einem (3) der länglichen Elemente (3, 4) fest verbunden ist und in einem hakenförmigen (13) Stück enden, um das erste Stück (1) zurückzuhalten, während das freie äußere Ende (8) des anderen länglichen Elements (4) ein ankerförmiges (9) Stück zum Zurückhalten des zweiten Stücks (2) umfaßt.

## Claims

1. Connection for adjustably assembling any two separated elements (1, 2) of the type comprising two elongated members (3, 4) that are screwed one on the other at one of their ends, and the free ends (7, 8) of which comprise each an assembling means on one and the other element, respectively, characterized in that the free end (7) of one (3) of the elongated members (3, 4) is provided with lugs or similar (12) on which can be assembled one (1) of the elements, or first element, and on which, in a coming-out position, and between which is axially mounted a head (17) taking selectively a coming-out position of the lugs (12) enabling a free rotation of the head with respect to the lugs and the insertion of said free end (7) in said first element (1), and a coming-in position between the lugs (12) enabling to rotatively drive the lugs (12) through the head (17) and to adjust the first element (1) with respect to the other element (2) or second element, by rotation of the head (17).

2. Connection according to claim 1, characterized in that said head (17) is formed by a rod (18) which is slidably and rotatively mounted in a bore (16) made in the elongated member (3) carrying the lugs (12) and which carries, at one of its ends, a pin or similar (19) provided with a recess (20) able to co-operate with a tool.

3. Connection according to claim 2, characterized in that said pin (19) has, in a plane that is orthogonal to the common longitudinal direction of the lugs (12), at least two dimensions (21, 22) that are respectively greater and lower than the distance (D) between the lugs (12).

4. Connection according to claim 2 or 3, characterized in that the top (23) of said pin is bevelled.

5. Connection according to one of the preceding claims, characterized in that said lugs (12) originate from a collar (14) that is integral with one (3) of the lengthened members (3, 4) and terminate by a hook formed part (13) for retaining the first element (1), while the free end (8) of the other lengthened member (4) comprises an anchor forming part (9) for retaining the second element (2).
